# EUROPEAN PATENT APPLICATION

(11) **EP 4 460 124 A1**
(43) Date of publication of application: **06.11.2024**
(21) Application number: 22914598.2
(22) Date of filing: 24.12.2022
(51) Int. Cl.: H04W 72/04, H04W 24/02

(54) **ASSOCIATION RELATIONSHIP DETERMINATION METHOD AND APPARATUS, CHIP AND MODULE DEVICE**

(30) Priority: 31.12.2021 CN 202111679648
(71) Applicant: Beijing Unisoc Communications Technology Co.,Ltd., Beijing 100083 (CN)
(72) Inventor: WANG, Hualei, Beijing 100083 (CN)
(74) Representative: Mewburn Ellis LLP
(86) International application number: PCT/CN2022/141718
(87) International publication number: WO 2023/125344

(57) **Abstract**

A method and apparatus for determining an association relationship, a chip, and a module device are provided in the disclosure. The method includes: receiving configuration information from a network device, where the configuration information includes a transmission configuration indicator (TCI) state or multiple TCI states, and includes an uplink reference signal (RS) resource set or multiple uplink RS resource sets; and determining an association relationship between a first TCI state among the multiple TCI states and a first uplink RS resource set among the multiple uplink RS resource sets, and/or, an association relationship between a second TCI state among the multiple TCI states and a second uplink RS resource set among the multiple uplink RS resource sets. With implementation of embodiments of the disclosure, the terminal device may determine an association relationship between a TCI state and an uplink RS resource set.

## Description

### TECHNICAL FIELD

Embodiments of the disclosure relate to the field of communications, and in particular, to a method and apparatus for determining an association relationship, a chip, and a module device.

### BACKGROUND

With the rapid development of communication technologies, communication scenarios are increasingly diverse, such as a scenario, proposed in a 5th generation mobile network (5G), in which high-frequency communication is performed by using a high-frequency band larger than 6 GHz. In these communication scenarios, a network device can communicate with the same terminal device through multiple transmission and reception points (TRPs). However, in the case where multiple TRPs communicate with the same terminal device, there is no solution on how to determine an association relationship between a sounding reference signal (SRS) resource set and a TRP in the existing schemes.

### SUMMARY

A method and apparatus for determining an association relationship, a chip, and a module device are provided in the disclosure, so that a terminal device can determine an association relationship between a transmission configuration indicator (TCI) state and an uplink reference signal (RS) resource set.

In a first aspect, a method of determining an association relationship is provided. The method including the following. A terminal device receives configuration information from a network device. The configuration information includes a TCI state or multiple TCI states, and includes an uplink RS resource set or multiple uplink RS resource sets. The terminal device determines an association relationship between a first TCI state among the multiple TCI states and a first uplink RS resource set among the multiple uplink RS resource sets, and/or, an association relationship between a second TCI state among the multiple TCI states and a second uplink RS resource set among the multiple uplink RS resource sets.

As can be seen, in the above technical solution, the terminal device can determine an association relationship between a TCI state and an uplink RS resource set. That is, in the case of multi-transmission and reception point (TRP) transmission, the terminal device may quickly determine an uplink RS resource set(s) for at least one TRP.

Optionally, with reference to the first aspect, the first uplink RS resource set is an uplink RS resource set with a lowest or highest identifier (ID) among the multiple uplink RS resource sets; or the first uplink RS resource set is a 1st uplink RS resource set among the multiple uplink RS resource sets.

As can be seen, in the above technical solution, the terminal device can determine an association relationship between the first TCI state and an uplink RS resource set with a lowest ID, or determine an association relationship between the first TCI state and an uplink RS resource set with a highest ID, or determine the association relationship between the first TCI state and the first uplink RS resource set. That is, in the case of multi-TRP transmission, the terminal device may quickly determine an uplink RS resource set(s) for a TRP(s).

Optionally, with reference to the first aspect, the first TCI state is a 1st TCI state among the multiple TCI states.

As can be seen, in the above technical solution, the terminal device can determine the association relationship between the first TCI state and the first uplink RS resource set. That is, in the case of multi-TRP transmission, the terminal device may quickly determine an uplink RS resource set(s) for a TRP(s).

Optionally, with reference to the first aspect, the terminal device determines the association relationship between the first TCI state among the multiple TCI states and the first uplink RS resource set among the multiple uplink RS resource sets, and/or, the association relationship between the second TCI state among the multiple TCI states and the second uplink RS resource set among the multiple uplink RS resource sets as follows. The terminal device receives first signaling from the network device. The first signaling indicates one or more of: the association relationship between the first TCI state and the first uplink RS resource set, and the association relationship between the second TCI state and the second uplink RS resource set. The first signaling includes one or more of: radio resource control (RRC) signaling, a medium access control control element (MAC CE), and downlink control information (DCI). The terminal device determines, according to the first signaling, the association relationship between the first TCI state and the first uplink RS resource set, and/or, the association relationship between the second TCI state and the second uplink RS resource set.

As can be seen, in the above technical solution, the terminal device may determine the association relationship between the first TCI state and the first uplink RS resource set, and/or, the association relationship between the second TCI state and the second uplink RS resource set, according to RRC signaling, an MAC CE, DCI, and the like. That is, in the case of multi-TRP transmission, the terminal device may quickly determine an uplink RS resource set(s) for a TRP(s) according to RRC signaling, an MAC CE, DCI, and the like.

Optionally, with reference to the first aspect, the first signaling is implemented as multiple RRC signaling. The multiple RRC signaling includes first RRC signaling and second RRC signaling. The first RRC signaling indicates the association relationship between the first TCI state and the first uplink RS resource set, and the second RRC signaling indicates the association relationship between the second TCI state and the second uplink RS resource set.

As can be seen, in the above technical solution, an association relationship between a TCI state and an uplink RS resource set may be explicitly indicated via one RRC signaling.

Optionally, with reference to the first aspect, the first signaling is implemented as an MAC CE. The MAC CE contains a first field and a second field. The first field indicates the association relationship between the first TCI state and the first uplink RS resource set, and the second field indicates the association relationship between the second TCI state and the second uplink RS resource set. Optionally, the first signaling is implemented as multiple MAC CEs. The multiple MAC CEs include a first MAC CE and a second MAC CE. The first MAC CE indicates the association relationship between the first TCI state and the first uplink RS resource set, and the second MAC CE indicates the association relationship between the second TCI state and the second uplink RS resource set.

As can be seen, in the above technical solution, multiple fields in an MAC CE may explicitly indicate association relationships between different TCI states and different uplink RS resource sets, thereby saving overhead. Meanwhile, association relationships between different TCI states and different uplink RS resource sets may be explicitly indicated via different MAC CEs.

Optionally, with reference to the first aspect, in the case where the first field is a first value, the first uplink RS resource set in the association relationship indicated by the first field is a 1st uplink RS resource set among the multiple uplink RS resource sets; and in the case where the first field is a second value, the first uplink RS resource set in the association relationship indicated by the first field is a 2nd uplink RS resource set among the multiple uplink RS resource sets. Optionally, in the case where the first field is a first value, the first uplink RS resource set in the association relationship indicated by the first field is an uplink RS resource set with a lowest ID among the multiple uplink RS resource sets; and in the case where the first field is a second value, the first uplink RS resource set in the association relationship indicated by the first field is an uplink RS resource set with a highest ID among the multiple uplink RS resource sets. Optionally, in the case where the first field is a first value, the first uplink RS resource set in the association relationship indicated by the first field is an uplink RS resource set with a highest ID among the multiple uplink RS resource sets; and in the case where the first field is a second value, the first uplink RS resource set in the association relationship indicated by the first field is an uplink RS resource set with a lowest ID among the multiple uplink RS resource sets.

As can be seen, in the above technical solution, different uplink RS resource sets may be flexibly indicated via different values of a field in an MAC CE.

Optionally, with reference to the first aspect, the association relationship between the first TCI state and the first uplink RS resource set is predefined by a protocol, and/or, the association relationship between the second TCI state and the second uplink RS resource set is predefined by the protocol.

As can be seen, in the above technical solution, the network device does not need to configure for the terminal device an association relationship between a TCI state and an uplink RS resource set.

Optionally, with reference to the first aspect, the first signaling is implemented as multiple DCI. The multiple DCI includes first DCI and second DCI. The first DCI indicates the association relationship between the first TCI state and the first uplink RS resource set, and the second DCI indicates the association relationship between the second TCI state and the second uplink RS resource set.

As can be seen, in the above technical solution, association relationships between different TCI states and different uplink RS resource sets may be explicitly indicated via different DCI.

Optionally, with reference to the first aspect, the first TCI state includes a first RS in quasi-co-location (QCL)-type D, and the terminal device determines the association relationship between the first TCI state among the multiple TCI states and the first uplink RS resource set among the multiple uplink RS resource sets as follows. The terminal device determines the association relationship between the first TCI state and the first uplink RS resource set according to a QCL relation between the first RS and at least one uplink RS resource in the first uplink RS resource set; or the terminal device receives second signaling from the network device. The second signaling is DCI, the second signaling indicates a first uplink RS resource, and the first uplink RS resource is contained in the first uplink RS resource set. The association relationship between the first TCI state and the first uplink RS resource set is determined according to a QCL relation between the first RS and the first uplink RS.

As can be seen, in the above technical solution, an association relationship between a TCI state and an uplink RS resource set may be implicitly indicated.

In a second aspect, an apparatus for determining an association relationship is provided. The apparatus includes a receiving unit and a determining unit. The receiving unit is configured to receive configuration information from a network device. The configuration information includes a TCI state or multiple TCI states, and includes an uplink RS resource set or multiple uplink RS resource sets. The determining unit is configured to determine an association relationship between a first TCI state among the multiple TCI states and a first uplink RS resource set among the multiple uplink RS resource sets, and/or, an association relationship between a second TCI state among the multiple TCI states and a second uplink RS resource set among the multiple uplink RS resource sets.

In a third aspect, a chip is provided. The chip includes a processor and a communication interface. The processor is configured to enable the chip to perform any one operation of the method in the first aspect above.

In a fourth aspect, a module device is provided. The module device includes a communication module, a power module, a storage module, and a chip. The power module is configured to power the module device. The storage module is configured to store data and instructions. The communication module is configured to perform internal communication in the module device or perform communication between the module device and an external device. The chip is configured to perform any one operation of the method in the first aspect above.

In a fifth aspect, an apparatus for determining an association relationship is provided. The apparatus includes a memory and a processor. The memory is configured to store a computer program. The computer program includes program instructions. The processor is configured to invoke the program instructions to enable the apparatus for determining an association relationship to perform any one operation of the method in the first aspect above.

In a sixth aspect, a computer-readable storage medium is provided. The computer storage medium is configured to store computer-readable instructions which, when run on a communication apparatus, enable the communication apparatus to perform any one operation of the method in the first aspect above.

In a seventh aspect, a computer program or computer program product is provided. The computer program or computer program product includes codes or instructions which, when run on a computer, enable the computer to perform any one operation of the method in the first aspect.

### BRIEF DESCRIPTION OF THE DRAWINGS

In order to describe technical solutions in embodiments of the disclosure more clearly, the following will give a brief introduction to accompanying drawings required for describing embodiments. Apparently, the accompanying drawings hereinafter described are merely some embodiments of the disclosure. Based on these drawings, those of ordinary skill in the art can also obtain other drawings without creative effort.
FIG. 1 is a schematic diagram illustrating a communication system provided in embodiments of the disclosure.
FIG. 2 is a schematic flowchart illustrating a method for determining an association relationship provided in embodiments of the disclosure.
FIG. 3 is a schematic diagram illustrating reserved fields *R* in a medium access control control element (MAC CE) provided in embodiments of the disclosure.
FIG. 4 is a schematic structural diagram illustrating an apparatus for determining an association relationship provided in embodiments of the disclosure.
FIG. 5 is another schematic structural diagram illustrating an apparatus for determining an association relationship provided in embodiments of the disclosure.
FIG. 6 is a schematic structural diagram illustrating a module device provided in embodiments of the disclosure.

### DETAILED DESCRIPTION

The following will clearly and completely describe technical solutions of embodiments of the disclosure with reference to accompanying drawings in embodiments of the disclosure. Apparently, embodiments described herein are merely some, rather than all embodiments, of the disclosure. Based on the embodiments of the disclosure, all other embodiments obtained by those of ordinary skill in the art without creative effort shall fall within the protection scope of the disclosure.

It may be also understood that, the terms used in embodiments of the disclosure are merely intended for describing embodiments, rather than limiting embodiments of the disclosure. For example, the singular form "a/an", "a kind of" "said", "above", "the", and "the one" used in the specification and the appended claims of the disclosure are also intended to include multiple forms, unless specified otherwise in the context. It may also be understood that the term "and/or" used in the disclosure refers to and includes any one or all possible combinations of one or more listed items.

It may be noted that the terms "first", "second", "third", and the like used in the specification, the claims, and the accompanying drawings of the disclosure are used to distinguish similar objects rather than describe a particular order. It may be understood that the data used herein may be interchangeable in appropriate situations, so that the embodiments of the disclosure described herein, for example, can be implemented in a sequence other than those illustrated or described herein. In addition, the terms "include" and "comprise" as well as variations thereof are intended to cover a non-exclusive inclusion. For example, a process, method, system, product, or server including a series of operations or units is not limited to the clearly listed operations or units, and instead, it can optionally include other operations or units that are not clearly listed or other operations or units inherent to the process, method, product, or device.

In order to better understand embodiments of the disclosure, a system architecture involved in embodiments of the disclosure will be first described below.

Technical solutions of embodiments of the disclosure are applicable to various communication systems, for example, a global system for mobile communication (GSM), a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, a universal mobile telecommunication system (UMTS), a worldwide interoperability for microwave access (WiMAX) communication system, a 5th generation (5G) communication system, new radio (NR), communication systems in the future, etc.

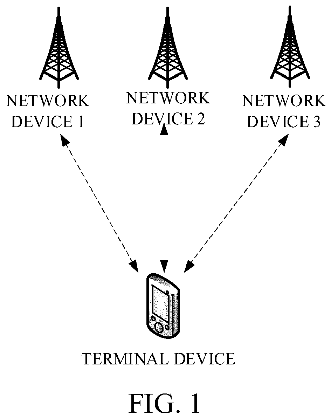

FIG. 1 is a schematic diagram illustrating a communication system provided in embodiments of the disclosure. The solutions of the disclosure can be applicable to the communication system. The communication system may include at least one network device and a terminal device. For illustrative purposes, in FIG. 1, the communication system includes three network devices and a terminal device.

### I. Terminal device

A terminal device includes a device that provides voice and/or data connectivity to a user. For example, the terminal device may be a device with wireless transceiver functions. The terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.). The terminal device may be a mobile phone, a pad, a computer with wireless transceiver functions, a virtual reality (VR) terminal device, an augmented reality (AR) terminal device, a wireless terminal in industrial control, an in-vehicle terminal device, a wireless terminal in self-driving, a wireless terminal in remote medicine, a wireless terminal in a smart grid, a wireless terminal in transportation safety, a wireless terminal in a smart city, a wireless terminal in a smart home, a wearable terminal device, etc. Application scenarios are not limited in embodiments of the disclosure. The terminal may sometimes be referred to as a terminal device, a user equipment (UE), an access terminal device, an in-vehicle terminal, an industrial control terminal, a UE unit, a UE station, a mobile station, a remote station, a remote terminal device, a mobile device, a UE terminal device, a terminal device, a wireless communication device, a UE agent, a UE apparatus, etc. The terminal may be fixed or mobile. In embodiments of the disclosure, the apparatus for implementing functions of the terminal device may be a terminal device, or may be an apparatus capable of supporting the terminal device to implement the functions, such as a chip system, or a combined device or component that can implement the functions of the terminal device. The apparatus may be installed in the terminal device.

### II. Network device

A network device may be a base station, an evolved NodeB (eNodeB), a transmission and reception point (TRP), a next-generation NodeB (gNB) in a 5G mobile communication system, a gNB in a sixth generation (6G) mobile communication system, a base station in a future mobile communication system, an access node in a wireless fidelity (Wi-Fi) system, etc. The network device may be a module or unit that implements some functions of the base station. For example, the network device may be a central unit (CU) or a distributed unit (DU). The CU implements functions of a radio resource control (RRC) protocol and packet data convergence protocol (PDCP) of the base station, and may also implement functions of a service data adaptation protocol (SDAP). The DU implements functions of a radio link control (RLC) layer and medium access control (MAC) layer of the base station, and may also implement functions of some or all physical (PHY) layers. For specific illustrations of the various protocol layers, reference may be made to related technical standards of 3rd generation partnership project (3GPP). The network device may be a macro base station, may be a micro base station or an indoor station, may be a relay node or a donor node, etc. In embodiments of the disclosure, the apparatus for implementing functions of the network device may be a network device itself, or may be an apparatus capable of supporting the network device to implement the functions, such as a chip system, or a combined device or component that can implement functions of an access network device. The apparatus may be installed in the network device. There is no limitation on a specific technology and a specific device form adopted by the network device in embodiments of the disclosure.

In order to facilitate understanding of solutions provided in embodiments of the disclosure, terms involved in the solutions are first introduced below, which are not repeated in the subsequent illustration.
I. An uplink reference signal (RS) may be a sounding reference signal (SRS) or the like, and an uplink RS resource set may be an SRS resource set. The SRS resource set may contain one or more SRS resources. An SRS resource may include at least one of: a time-domain resource (including a period of a periodic resource, a slot-level offset within the period, a slot-level offset of a non-periodic resource relative to a slot in which activation signaling is located, an orthogonal frequency division multiplexing (OFDM) symbol index in a slot, etc.), a frequency-domain resource (including a bandwidth, a frequency hopping configuration, or a frequency comb configuration), a power control parameter, or a spatial relation parameter. It is noted that, optionally, in the disclosure, the usage/type of an SRS resource set is configured as codebook and/or non-codebook.

### II. Transmission configuration indicator (TCI) state

A TCI state may indicate a quasi-co-location (QCL) relation between two RSs. Each TCI state may include at least one of: a serving cell index (ServeCellIndex), a bandwidth part (BWP) identifier (ID), or an RS resource ID. The RS resource ID may be at least one of: a non-zero power (NZP) channel state information-reference signal (CSI-RS) ID (NZP-CSI-RS-ResourceId), an NZP CSI-RS resource set ID (NZP-CSI-RS-ResourceSetId), a synchronous signal/physical broadcast channel block (SSB) index (SSB-Index).

A beam is in a correspondence with an RS resource, and one beam corresponds to one RS resource. A beam is implemented as an RS.

QCL: the QCL involved in the disclosure is only QCL-type D, and thus only QCL-type D is described. It may be understood that the QCL-type D is QCL defined according to a spatial reception parameter(s), which is referred to as spatial QCL. The spatial reception parameter(s) may include one or more of an angle of arrival (AOA), an average AOA, AOA spread, an angle of departure (AOD), an average AOD, AOD spread, a receive-antenna spatial correlation parameter, a transmit-antenna spatial correlation parameter, a transmit beam, a receive beam, and a resource ID. The resource ID may include one or more of: a CSI-RS resource ID, an SRS resource ID, an SSB resource ID, a resource ID of a preamble sequence transmitted on a physical random access channel (PRACH), and a demodulation reference signal (DMRS) resource ID.

In the case where a QCL relation is a QCL-type D relation, the QCL relation may be considered as spatial QCL.

In order to realize that a terminal device can determine an association relationship between a TCI state and an uplink RS resource set, a method and apparatus for determining an association relationship, a chip, and a module device are provided in the disclosure. The method and apparatus for determining an association relationship, a chip, and a module device provided in embodiments of the disclosure are further described in detail below.

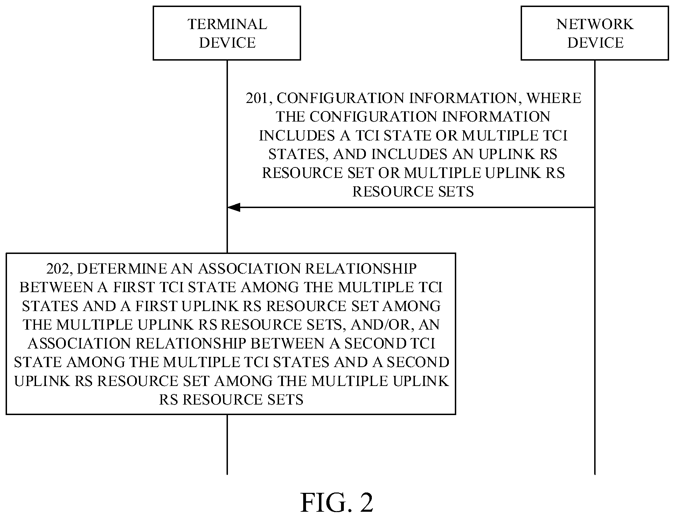

FIG. 2 is a schematic flow chart illustrating a method for determining an association relationship provided in embodiments of the disclosure. As illustrated in FIG. 2, the method for determining an association relationship includes operations at 201 and 202 as follows. Execution bodies of the method illustrated in FIG. 2 may be a terminal device and a network device. Alternatively, the execution bodies of the method illustrated in FIG. 2 may be a chip in a terminal device and a chip in a network device. For example, in FIG. 2, the execution bodies of the method are a terminal device and a network device.

At 201, the network device transmits configuration information to the terminal device, where the configuration information includes a TCI state or multiple TCI states, and includes an uplink RS resource set or multiple uplink RS resource sets.

Accordingly, the terminal device receives the configuration information from the network device.

Optionally, the configuration information may include first configuration information and/or second configuration information. The first configuration information includes one or more TCI states, and the second configuration information includes one or more uplink RS resource sets. In a possible implementation, the configuration information may be carried in downlink control information (DCI), radio resource control (RRC) signaling, or a medium access control control element (MAC CE), which is not limited herein. For example, the first configuration information or the second configuration information may be carried in DCI, RRC signaling, or an MAC CE.

Optionally, a TCI state may correspond to a TRP. The case that a TCI state corresponds to a TRP may be understood as that a TCI state corresponds to a beam, which is not limited herein.

Optionally, an uplink RS resource set may correspond to a TRP.

At 202, the terminal device determines an association relationship between a first TCI state among the multiple TCI states and a first uplink RS resource set among the multiple uplink RS resource sets, and/or, an association relationship between a second TCI state among the multiple TCI states and a second uplink RS resource set among the multiple uplink RS resource sets.

Optionally, the case that the terminal device determines the association relationship between the first TCI state among the multiple TCI states and the first uplink RS resource set among the multiple uplink RS resource sets, and/or, the association relationship between the second TCI state among the multiple TCI states and the second uplink RS resource set among the multiple uplink RS resource sets may be understood as follows. The terminal device determines an association relationship between the first TCI state among the multiple TCI states and an uplink RS resource in the first uplink RS resource set among the multiple uplink RS resource sets, and/or, an association relationship between the second TCI state among the multiple TCI states and an uplink RS resource in the second uplink RS resource set among the multiple uplink RS resource sets.

In the case where in the operation at 201 the configuration information includes a TCI state and an uplink RS resource set, or in the case where in the operation at 201 the configuration information includes a TCI state and multiple uplink RS resource sets, or in the case where in the operation at 201 the configuration information includes multiple TCI states and an uplink RS resource set, the terminal device may determine an association relationship between a TCI state and an uplink RS resource set, or the association relationship between a TCI state and an uplink RS resource set is predefined by a protocol. It may be understood that for a specific manner in which the terminal device determines the association relationship between a TCI state and an uplink RS resource set, reference may be made to the process that the terminal device determines the association relationship between the first TCI state and the first uplink RS resource set, which is not repeated herein.

Optionally, the first TCI state and the second TCI state may be implemented in the following manners, which is not limited herein.

Manner 1.1: the first TCI state is a 1st TCI state among the multiple TCI states, and the second TCI state is a 2nd TCI state among the multiple TCI states. Optionally, the first TCI state is a TCI state that ranks first among the multiple TCI states, and the second TCI state is a TCI state that ranks second among the multiple TCI states. Optionally, the first TCI state is before the second TCI state in a time-domain position. Optionally, the first TCI state may be a TCI state with a lowest ID among the multiple TCI states, and the second TCI state may be a TCI state among the multiple TCI states except the TCI state with the lowest ID, e.g., the second TCI state may be a TCI state with a highest ID among the multiple TCI states. Similarly, optionally, the first TCI state may be a TCI state with a highest ID among the multiple TCI states, and the second TCI state may be a TCI state among the multiple TCI states except the TCI state with the highest ID, e.g., the second TCI state may be a TCI state with a lowest ID among the multiple TCI states.

Manner 1.2: the first TCI state may be a TCI state with a lowest ID among the multiple TCI states, and the second TCI state may be a TCI state among the multiple TCI states except the TCI state with the lowest ID, e.g., the second TCI state may be a TCI state with a highest ID among the multiple TCI states. Optionally, the first TCI state may be a TCI state with a highest ID among the multiple TCI states, and the second TCI state may be a TCI state among the multiple TCI states except the TCI state with the highest ID, e.g., the second TCI state may be a TCI state with a lowest ID among the multiple TCI states.

Optionally, the first uplink RS resource set and the second uplink RS resource set may be implemented in the following manners, which is not limited herein.

Manner 2.1: the first uplink RS resource set is an uplink RS resource set with a lowest ID among the multiple uplink RS resource sets, and the second uplink RS resource set is an uplink RS resource sets among the multiple uplink RS resource sets except the uplink RS resource set with the lowest ID, e.g., the second uplink RS resource set is an uplink RS resource set with a highest ID among the multiple uplink RS resource sets.

Manner 2.2: the first uplink RS resource set is an uplink RS resource set with a highest ID among the multiple uplink RS resource sets, and the second uplink RS resource set is an uplink RS resource sets among the multiple uplink RS resource sets except the uplink RS resource set with the highest ID, e.g., the second uplink RS resource set is an uplink RS resource set with a lowest ID among the multiple uplink RS resource sets.

Manner 2.3: the first uplink RS resource set is a 1st uplink RS resource set among the multiple uplink RS resource sets, and the second uplink RS resource set is a 2nd uplink RS resource set among the multiple uplink RS resource sets. In a possible implementation, the first uplink RS resource set is an uplink RS resource set that ranks first among the multiple uplink RS resource sets, and the second uplink RS resource set is an uplink RS resource set that ranks second among the multiple uplink RS resource sets. In a possible implementation, the first uplink RS resource set is an uplink RS resource set that ranks second among the multiple uplink RS resource sets, and the second uplink RS resource set is an uplink RS resource set that ranks first among the multiple uplink RS resource sets. In a possible implementation, the first uplink RS resource set may be an uplink RS resource set with a lowest ID among the multiple uplink RS resource sets, and the second uplink RS resource set is an uplink RS resource set among the multiple uplink RS resource sets except the uplink RS resource set with the lowest ID, e.g., the second uplink RS resource set is an uplink RS resource set with a highest ID among the multiple uplink RS resource set. In another possible implementation, the first uplink RS resource set is an uplink RS resource set with a highest ID among the multiple uplink RS resource sets, and the second uplink RS resource set is an uplink RS resource set among the multiple uplink RS resource sets except the uplink RS resource set with the highest ID, e.g., the second uplink RS resource set is an uplink RS resource set with a lowest ID among the multiple uplink RS resource sets.

Optionally, the operation at 202 may be implemented in any one of the following manners, which are not limited herein.

Manner 3.1: implementation of the operation at 202 is predefined by a protocol. That is, the association relationship between the first TCI state and the first uplink RS resource set is predefined by a protocol, and/or, the association relationship between the second TCI state and the second uplink RS resource set is predefined by the protocol. Optionally, since the association relationship between the first TCI state and the first uplink RS resource set is predefined by the protocol and the association relationship between the second TCI state and the second uplink RS resource set is predefined by the protocol, the network device does not need to configure for the terminal device an association relationship between a TCI state and an uplink RS resource set.

Manner 3.2: implementation of the operation at 202 is configured by the network device. That is, the terminal device receives first signaling from the network device, and accordingly, the network device transmits the first signaling to the terminal device. In the case where the terminal device receives the first signaling, the terminal device may determine, according to the first signaling, the association relationship between the first TCI state and the first uplink RS resource set, and/or, the association relationship between the second TCI state and the second uplink RS resource set. The first signaling indicates one or more of: the association relationship between the first TCI state and the first uplink RS resource set, and the association relationship between the second TCI state and the second uplink RS resource set. The first signaling includes one or more of: RRC signaling, an MAC CE, and DCI. That is, in the case of multi-TRP transmission or single-TRP transmission, the terminal device may quickly determine an uplink RS resource set(s) for a TRP(s) according to RRC signaling, an MAC CE, DCI, and the like. Optionally, multi-TRP transmission or single-TRP transmission may be determined by the number of TCI state(s). For example, the case that the number of TCI states configured by a network is 2 may represent multi-TRP transmission; or the case that the number of TCI state(s) configured by the network is 1 may represent single-TRP transmission.

Manner 3.3: the operation at 202 is implemented in an implicit manner. That is, the first TCI state includes a first RS in QCL-type D, and the terminal device determines the association relationship between the first TCI state among the multiple TCI states and the first uplink RS resource set among the multiple uplink RS resource sets as follows. The terminal device determines the association relationship between the first TCI state and the first uplink RS resource set according to a QCL relation between the first RS and at least one uplink RS resource in the first uplink RS resource set; or the terminal device receives second signaling from the network device, and accordingly, the network device transmits the second signaling to the terminal device. The second signaling is DCI, the second signaling indicates a first uplink RS resource, and the first uplink RS resource is contained in the first uplink RS resource set. The terminal device determines the association relationship between the first TCI state and the first uplink RS resource set according to a QCL relation between the first RS and the first uplink RS. That is, it can be seen that the association relationship between the first TCI state and the first uplink RS resource set is implicitly indicated. Optionally, the QCL relation between the first RS and the at least one uplink RS resource in the first uplink RS resource set is a QCL-type D relation, and the QCL relation between the first RS and the first uplink RS is a QCL-type D relation. For the case that the terminal device implicitly determines the association relationship between the second TCI state among the multiple TCI states and the second uplink RS resource set among the multiple uplink RS resource sets, reference may be made to the process that the terminal device implicitly determines the association relationship between the first TCI state among the multiple TCI states and the first uplink RS resource set among the multiple uplink RS resource sets, which is not repeated herein.

Optionally, for manner 3.2, the first signaling may be implemented as one or more RRC signaling, which is not limited herein. In a possible implementation, the first signaling may be implemented as one RRC signaling, and the RRC signaling indicates one or more of: the association relationship between the first TCI state and the first uplink RS resource set, and the association relationship between the second TCI state and the second uplink RS resource set. That is, one RRC signaling may indicate a one-to-one association relationship between at least one TCI state and at least one uplink RS resource set, thereby saving overhead. In another possible implementation, the first signaling may be implemented as multiple RRC signaling, and the multiple RRC signaling includes first RRC signaling and second RRC signaling. The first RRC signaling indicates the association relationship between the first TCI state and the first uplink RS resource set, and the second RRC signaling indicates the association relationship between the second TCI state and the second uplink RS resource set. That is, one RRC signaling may explicitly indicate an association relationship between a TCI state and an uplink RS resource set. It is noted that in the disclosure, the association relationship between a TCI state and an uplink RS resource set is indicated via a field in the RRC signaling, where the field is not limited herein.

Optionally, for manner 3.2, the first signaling may be implemented as one or more MAC CEs, which is not limited herein. In a possible implementation, the first signaling may be implemented as an MAC CE, and the MAC CE contains a first field and a second field. The MAC CE may further contain other fields, which is not limited herein. The first field indicates the association relationship between the first TCI state and the first uplink RS resource set, and the second field indicates the association relationship between the second TCI state and the second uplink RS resource set. The first field corresponds to the first TCI state, and the second field corresponds to the second TCI state. Both the first field and the second field may be an originally reserved field *R* or other fields, which is not limited herein. That is, it can be seen that multiple fields in an MAC CE may explicitly indicate association relationships between different TCI states and different uplink RS resource sets, thereby saving overhead. In another possible implementation, the first signaling may be implemented as multiple MAC CEs, and the multiple MAC CEs include a first MAC CE and a second MAC CE. The first MAC CE indicates the association relationship between the first TCI state and the first uplink RS resource set, and the second MAC CE indicates the association relationship between the second TCI state and the second uplink RS resource set. That is, an MAC CE may explicitly indicate an association relationship between a TCI state and an uplink RS resource set.

Optionally, in the case where the first field is different from the second field in value, an uplink RS resource set in the association relationship indicated by the first field and an uplink RS resource set in the association relationship indicated by the second field may be implemented in the following manners, which is not limited herein.

Manner 4.1: in the case where the first field is a first value, the first uplink RS resource set in the association relationship indicated by the first field is an uplink RS resource set with a lowest ID among the multiple uplink RS resource sets; and in the case where the first field is a second value, the first uplink RS resource set in the association relationship indicated by the first field is an uplink RS resource set with a highest ID among the multiple uplink RS resource sets. The first value is different from the second value. For example, in the case where the first value is 1, the second value is 0; and in the case where the first value is 0, the second value is 1. Similarly, in the case where the second field is a first value, the second uplink RS resource set in the association relationship indicated by the second field is an uplink RS resource set among the multiple uplink RS resource sets except an uplink RS resource set with a lowest ID, e.g., the second uplink RS resource set in the association relationship indicated by the second field is an uplink RS resource set with a highest ID among the multiple uplink RS resource sets. In the case where the second field is a second value, the second uplink RS resource set in the association relationship indicated by the second field is an uplink RS resource set among the multiple uplink RS resource sets except an uplink RS resource set with a highest ID, e.g., the second uplink RS resource set in the association relationship indicated by the second field is an uplink RS resource set with a lowest ID among the multiple uplink RS resource sets.

Manner 4.2: in the case where the first field is a first value, the first uplink RS resource set in the association relationship indicated by the first field is an uplink RS resource set with a lowest ID among the multiple uplink RS resource sets; and in the case where the first field is a second value, the first uplink RS resource set in the association relationship indicated by the first field is an uplink RS resource set with a highest ID among the multiple uplink RS resource sets. The first value is different from the second value. For example, in the case where the first value is 1, the second value is 0; and in the case where the first value is 0, the second value is 1. Similarly, in the case where the second field is a first value, the second uplink RS resource set in the association relationship indicated by the second field is an uplink RS resource set with a lowest ID among the multiple uplink RS resource sets; and in the case where the second field is a second value, the second uplink RS resource set in the association relationship indicated by the second field is an uplink RS resource set with a highest ID among the multiple uplink RS resource sets. The first value is different from the second value.

Manner 4.3: in the case where the first field is a first value, the first uplink RS resource set in the association relationship indicated by the first field is an uplink RS resource set with a lowest ID among the multiple uplink RS resource sets; and in the case where the first field is a second value, the first uplink RS resource set in the association relationship indicated by the first field is a 1st uplink RS resource set among the multiple uplink RS resource sets. Similarly, in the case where the second field is a first value, the second uplink RS resource set in the association relationship indicated by the second field is an uplink RS resource set among the multiple uplink RS resource sets except an uplink RS resource set with a lowest ID, e.g., the second uplink RS resource set in the association relationship indicated by the second field is an uplink RS resource set with a highest ID among the multiple uplink RS resource sets. In the case where the second field is a second value, the second uplink RS resource set in the association relationship indicated by the second field is a 2nd uplink RS resource set among the multiple uplink RS resource sets.

Manner 4.4: in the case where the first field is a first value, the first uplink RS resource set in the association relationship indicated by the first field is an uplink RS resource set with a lowest ID among the multiple uplink RS resource sets; and in the case where the first field is a second value, the first uplink RS resource set in the association relationship indicated by the first field is a 1st uplink RS resource set among the multiple uplink RS resource sets. Similarly, in the case where the second field is a first value, the second uplink RS resource set in the association relationship indicated by the second field is an uplink RS resource set with a lowest ID among the multiple uplink RS resource sets; and in the case where the second field is a second value, the second uplink RS resource set in the association relationship indicated by the second field is a 1st uplink RS resource set among the multiple uplink RS resource sets.

Manner 4.5: in the case where the first field is a first value, the first uplink RS resource set in the association relationship indicated by the first field is an uplink RS resource set with a highest ID among the multiple uplink RS resource sets; and in the case where the first field is a second value, the first uplink RS resource set in the association relationship indicated by the first field is a 1st uplink RS resource set among the multiple uplink RS resource sets. Similarly, in the case where the second field is a first value, the second uplink RS resource set in the association relationship indicated by the second field is an uplink RS resource set among the multiple uplink RS resource sets except an uplink RS resource set with a highest ID, e.g., the second uplink RS resource set in the association relationship indicated by the second field is an uplink RS resource set with a lowest ID among the multiple uplink RS resource sets. In the case where the second field is a second value, the second uplink RS resource set in the association relationship indicated by the second field is a 2nd uplink RS resource set among the multiple uplink RS resource sets.

Manner 4.6: in the case where the first field is a first value, the first uplink RS resource set in the association relationship indicated by the first field is an uplink RS resource set with a highest ID among the multiple uplink RS resource sets; and in the case where the first field is a second value, the first uplink RS resource set in the association relationship indicated by the first field is a 1st uplink RS resource set among the multiple uplink RS resource sets. Similarly, in the case where the second field is a first value, the second uplink RS resource set in the association relationship indicated by the second field is an uplink RS resource set with a highest ID among the multiple uplink RS resource sets; and in the case where the second field is a second value, the second uplink RS resource set in the association relationship indicated by the second field is a 1st uplink RS resource set among the multiple uplink RS resource sets.

Manner 4.7: in the case where the first field is a first value, the first uplink RS resource set in the association relationship indicated by the first field is a 1st uplink RS resource set among the multiple uplink RS resource sets; and in the case where the first field is a second value, the first uplink RS resource set in the association relationship indicated by the first field is a 2nd uplink RS resource set among the multiple uplink RS resource sets. Similarly, in the case where the second field is a first value, the second uplink RS resource set in the association relationship indicated by the second field is a 2nd uplink RS resource set among the multiple uplink RS resource sets; and in the case where the second field is a second value, the second uplink RS resource set in the association relationship indicated by the second field is a 1st uplink RS resource set among the multiple uplink RS resource sets.

Manner 4.8: in the case where the first field is a first value, the first uplink RS resource set in the association relationship indicated by the first field is a 1st uplink RS resource set among the multiple uplink RS resource sets; and in the case where the first field is a second value, the first uplink RS resource set in the association relationship indicated by the first field is a 2nd uplink RS resource set among the multiple uplink RS resource sets. Similarly, in the case where the second field is a first value, the second uplink RS resource set in the association relationship indicated by the second field is a 1st uplink RS resource set among the multiple uplink RS resource sets; and in the case where the second field is a second value, the second uplink RS resource set in the association relationship indicated by the second field is a 2nd uplink RS resource set among the multiple uplink RS resource sets.

It may be noted that in the disclosure, in the case where the same field is implemented as different values, an uplink RS resource set in an association relationship indicated by the same field is implemented as different uplink RS resource sets. For example, in manner 4.5, in the case where the first field is a first value, the first uplink RS resource set in the association relationship indicated by the first field is an uplink RS resource set with a highest ID among the multiple uplink RS resource sets; and in the case where the first field is a second value, the first uplink RS resource set in the association relationship indicated by the first field is a 1st uplink RS resource set among the multiple uplink RS resource sets. The 1st uplink RS resource set is an uplink RS resource set among the multiple uplink RS resource sets except an uplink RS resource set with a highest ID, e.g., the 1st uplink RS resource set is an uplink RS resource set with a lowest ID among the multiple uplink RS resource sets.

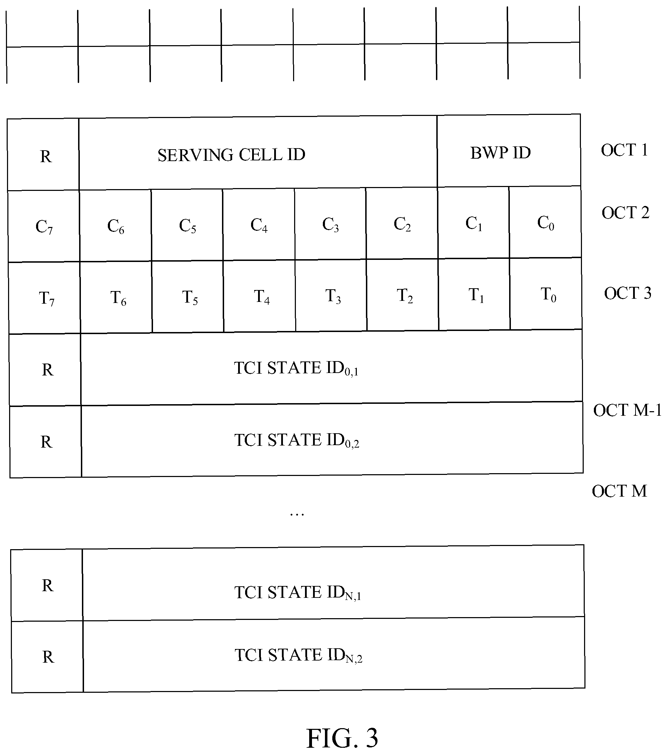

Exemplarily, refer to FIG. 3, which is a schematic diagram illustrating reserved fields *R* in an MAC CE provided in embodiments of the disclosure. As illustrated in FIG. 3, in the case where TCI state ID_{0,1} corresponds to the first TCI state, TCI state ID_{0,2} corresponds to the second TCI state, the first field is an field *R* that belongs to the same byte as TCI state ID_{0,1}, and the second field is an field *R* that belongs to the same byte as TCI state ID_{0,2}, the following may be obtained. In the case where the first field is 1, the first uplink RS resource set in the association relationship indicated by the first field is a 1st uplink RS resource set among the multiple uplink RS resource set; in the case where the first field is 0, the first uplink RS resource set in the association relationship indicated by the first field is a 2nd uplink RS resource set among the multiple uplink RS resource set; in the case where the second field is 0, the second uplink RS resource set in the association relationship indicated by the second field is a 2nd uplink RS resource set among the multiple uplink RS resource sets; and in the case where the second field is 1, the second uplink RS resource set in the association relationship indicated by the second field is a 1st uplink RS resource set among the multiple uplink RS resource sets.

The first MAC CE may contain a third field, the third field corresponds to the first TCI state, and the third field may be an originally reserved field *R* or other fields, which is not limited herein. The first MAC CE may further contain other fields, which is not limited herein. For determination of a first uplink RS resource set in an association relationship indicated by the third field in the case of different values of the third field, reference may be made to determination of the first uplink RS resource set in the association relationship indicated by the first field in the case of different values of the first field, which is not limited herein. Similarly, the second MAC CE may contain a fourth field, the fourth field corresponds to the second TCI state, and the fourth field may be an originally reserved field *R* or other fields, which is not limited herein. The second MAC CE may further contain other fields, which is not limited herein. For determination of a second uplink RS resource set in an association relationship indicated by the fourth field in the case of different values of the fourth field, reference may be made to determination of the second uplink RS resource set in the association relationship indicated by the second field in the case of different values of the second field, which is not limited herein.

Optionally, for manner 3.2, the first signaling may be implemented as one or more DCI, which is not limited herein. In a possible implementation, the first signaling may be implemented as one DCI, and the DCI indicates one or more of: the association relationship between the first TCI state and the first uplink RS resource set, and the association relationship between the second TCI state and the second uplink RS resource set. That is, one DCI may indicate a one-to-one association relationship between at least one TCI state and at least one uplink RS resource set, thereby saving overhead. In a possible implementation, the first signaling may be implemented as multiple DCI, and the multiple DCI includes first DCI and second DCI. The first DCI indicates the association relationship between the first TCI state and the first uplink RS resource set, and the second DCI indicates the association relationship between the second TCI state and the second uplink RS resource set. That is, one DCI may explicitly indicate an association relationship between a TCI state and an uplink RS resource set. It is to be noted that in the disclosure, the association relationship between a TCI state and an uplink RS resource set may be indicated via a field in the DCI, where the field is not limited herein.

In the case where the first signaling is implemented as one DCI, the DCI may further indicate at least one TCI state for uplink. The at least one TCI state is used for uplink transmission for at least one TRP, i.e., one TCI state for uplink indicates uplink transmission for one TRP. Exemplarily, one DCI may further indicate two TCI states for uplink, and the two TCI states are used for uplink transmission for two TRPs.

In the case where the first signaling is implemented as multiple DCI, the first DCI may further indicate at least one TCI state for uplink. The at least one TCI state is used for uplink transmission for at least one TRP, i.e., one TCI state for uplink indicates uplink transmission for one TRP. Exemplarily, the first DCI may further indicate two TCI states for uplink, and the two TCI states are used for uplink transmission for two TRPs. Similarly, the second DCI may further indicate at least one TCI state for uplink. The at least one TCI state is used for uplink transmission for at least one TRP, i.e., one TCI state for uplink indicates uplink transmission for one TRP. Exemplarily, the second DCI may further indicate two TCI states for uplink, and the two TCI states are used for uplink transmission for two TRPs.

For manner 3.3, the first RS may be a source RS. The case that second signaling indicates the first uplink RS resource may be understood as that a preset field in the second signaling indicates the first uplink RS resource. The preset field may be a scheduling request indicator (SRI) field or other fields, which is not limited herein.

Optionally, the terminal device may further receive third signaling from the network device, and accordingly, the network device transmits the third signaling to the terminal device. The third signaling is DCI. It may be understood that the third signaling may indicate at least one TCI state for uplink. The at least one TCI state is used for uplink transmission for at least one TRP, i.e., one TCI state for uplink indicates uplink transmission for one TRP. Exemplarily, the third signaling may indicate two TCI states for uplink, and the two TCI states are used for uplink transmission for two TRPs.

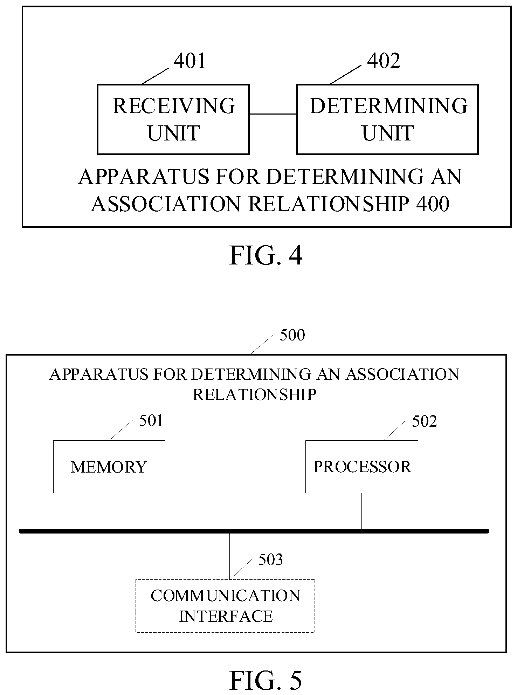

Refer to FIG. 4, which is a schematic structural diagram illustrating an apparatus for determining an association relationship provided in embodiments of the disclosure. The apparatus for determining an association relationship may be a terminal device or an apparatus (e.g., a chip) having functions of a terminal device. Specifically, as illustrated in FIG. 4, the apparatus for determining an association relationship 400 includes a receiving unit 401 and a determining unit 402. The receiving unit 401 is configured to receive configuration information from a network device. The configuration information includes a TCI state or multiple TCI states, and includes an uplink RS resource set or multiple uplink RS resource sets. The determining unit 402 is configured to determine an association relationship between a first TCI state among the multiple TCI states and a first uplink RS resource set among the multiple uplink RS resource sets, and/or, an association relationship between a second TCI state among the multiple TCI states and a second uplink RS resource set among the multiple uplink RS resource sets.

Optionally, the first uplink RS resource set is an uplink RS resource set with a lowest or highest ID among the multiple uplink RS resource sets; or the first uplink RS resource set is a 1st uplink RS resource set among the multiple uplink RS resource sets.

Optionally, the first TCI state is a 1st TCI state among the multiple TCI states.

Optionally, the determining unit 402 is configured to determine the association relationship between the first TCI state among the multiple TCI states and the first uplink RS resource set among the multiple uplink RS resource sets, and/or, the association relationship between the second TCI state among the multiple TCI states and the second uplink RS resource set among the multiple uplink RS resource sets as follows. The determining unit 402 is configured to receive first signaling from the network device via the receiving unit 401, where the first signaling indicates one or more of: the association relationship between the first TCI state and the first uplink RS resource set, and the association relationship between the second TCI state and the second uplink RS resource set, and where the first signaling includes one or more of: RRC signaling, an MAC CE, and DCI. The determining unit 402 is configured to determine, according to the first signaling, the association relationship between the first TCI state and the first uplink RS resource set, and/or, the association relationship between the second TCI state and the second uplink RS resource set.

Optionally, the first signaling is implemented as multiple RRC signaling, where the multiple RRC signaling includes first RRC signaling and second RRC signaling. The first RRC signaling indicates the association relationship between the first TCI state and the first uplink RS resource set, and the second RRC signaling indicates the association relationship between the second TCI state and the second uplink RS resource set.

Optionally, the first signaling is implemented as an MAC CE, where the MAC CE contains a first field and a second field, where the first field indicates the association relationship between the first TCI state and the first uplink RS resource set, and the second field indicates the association relationship between the second TCI state and the second uplink RS resource set. Optionally, the first signaling is implemented as multiple MAC CEs, where the multiple MAC CEs include a first MAC CE and a second MAC CE, where the first MAC CE indicates the association relationship between the first TCI state and the first uplink RS resource set, and the second MAC CE indicates the association relationship between the second TCI state and the second uplink RS resource set.

Optionally, in the case where the first field is a first value, the first uplink RS resource set in the association relationship indicated by the first field is a 1 st uplink RS resource set among the multiple uplink RS resource sets; and in the case where the first field is a second value, the first uplink RS resource set in the association relationship indicated by the first field is a 2nd uplink RS resource set among the multiple uplink RS resource sets. Optionally, in the case where the first field is a first value, the first uplink RS resource set in the association relationship indicated by the first field is an uplink RS resource set with a lowest ID among the multiple uplink RS resource sets; and in the case where the first field is a second value, the first uplink RS resource set in the association relationship indicated by the first field is an uplink RS resource set with a highest ID among the multiple uplink RS resource sets. Optionally, in the case where the first field is a first value, the first uplink RS resource set in the association relationship indicated by the first field is an uplink RS resource set with a highest ID among the multiple uplink RS resource sets; and in the case where the first field is a second value, the first uplink RS resource set in the association relationship indicated by the first field is an uplink RS resource set with a lowest ID among the multiple uplink RS resource sets.

Optionally, the association relationship between the first TCI state and the first uplink RS resource set is predefined by a protocol, and/or, the association relationship between the second TCI state and the second uplink RS resource set is predefined by the protocol.

Optionally, the first signaling is implemented as multiple DCI, where the multiple DCI includes first DCI and second DCI. The first DCI indicates the association relationship between the first TCI state and the first uplink RS resource set, and the second DCI indicates the association relationship between the second TCI state and the second uplink RS resource set.

Optionally, the first TCI state includes a first RS in QCL-type D. The determining unit 402 is configured to determine the association relationship between the first TCI state among the multiple TCI states and the first uplink RS resource set among the multiple uplink RS resource sets as follows. The determining unit 402 is configured to determine the association relationship between the first TCI state and the first uplink RS resource set according to a QCL relation between the first RS and at least one uplink RS resource in the first uplink RS resource set; or the determining unit 402 is configured to receive second signaling from the network device via the receiving unit 401. The second signaling is DCI, the second signaling indicates a first uplink RS resource, and the first uplink RS resource is contained in the first uplink RS resource set. The association relationship between the first TCI state and the first uplink RS resource set is determined according to a QCL relation between the first RS and the first uplink RS.

A chip is further provided in embodiments of the disclosure. The chip can be configured to perform the related operations performed by an electronic device in the foregoing method embodiment. The chip includes a processor and a communication interface. The processor is configured to enable the chip to: receive configuration information from a network device, where the configuration information includes a TCI state or multiple TCI states, and includes an uplink RS resource set or multiple uplink RS resource sets; and determine an association relationship between a first TCI state among the multiple TCI states and a first uplink RS resource set among the multiple uplink RS resource sets, and/or, an association relationship between a second TCI state among the multiple TCI states and a second uplink RS resource set among the multiple uplink RS resource sets.

Optionally, the first uplink RS resource set is an uplink RS resource set with a lowest or highest ID among the multiple uplink RS resource sets; or the first uplink RS resource set is a 1st uplink RS resource set among the multiple uplink RS resource sets.

Optionally, the first TCI state is a 1st TCI state among the multiple TCI states.

Optionally, the case of determining the association relationship between the first TCI state among the multiple TCI states and the first uplink RS resource set among the multiple uplink RS resource sets and/or the association relationship between the second TCI state among the multiple TCI states and the second uplink RS resource set among the multiple uplink RS resource sets includes the following. Receive first signaling from the network device, where the first signaling indicates one or more of: the association relationship between the first TCI state and the first uplink RS resource set, and the association relationship between the second TCI state and the second uplink RS resource set, and where the first signaling includes one or more of: RRC signaling, an MAC CE, and DCI. Determine, according to the first signaling, the association relationship between the first TCI state and the first uplink RS resource set, and/or, the association relationship between the second TCI state and the second uplink RS resource set.

Optionally, the first signaling is implemented as multiple RRC signaling, where the multiple RRC signaling includes first RRC signaling and second RRC signaling. The first RRC signaling indicates the association relationship between the first TCI state and the first uplink RS resource set, and the second RRC signaling indicates the association relationship between the second TCI state and the second uplink RS resource set.

Optionally, the first signaling is implemented as an MAC CE, where the MAC CE contains a first field and a second field, where the first field indicates the association relationship between the first TCI state and the first uplink RS resource set, and the second field indicates the association relationship between the second TCI state and the second uplink RS resource set. Optionally, the first signaling is implemented as multiple MAC CEs, where the multiple MAC CEs include a first MAC CE and a second MAC CE, where the first MAC CE indicates the association relationship between the first TCI state and the first uplink RS resource set, and the second MAC CE indicates the association relationship between the second TCI state and the second uplink RS resource set.

Optionally, in the case where the first field is a first value, the first uplink RS resource set in the association relationship indicated by the first field is a 1st uplink RS resource set among the multiple uplink RS resource sets; and in the case where the first field is a second value, the first uplink RS resource set in the association relationship indicated by the first field is a 2nd uplink RS resource set among the multiple uplink RS resource sets. Optionally, in the case where the first field is a first value, the first uplink RS resource set in the association relationship indicated by the first field is an uplink RS resource set with a lowest ID among the multiple uplink RS resource sets; and in the case where the first field is a second value, the first uplink RS resource set in the association relationship indicated by the first field is an uplink RS resource set with a highest ID among the multiple uplink RS resource sets. Optionally, in the case where the first field is a first value, the first uplink RS resource set in the association relationship indicated by the first field is an uplink RS resource set with a highest ID among the multiple uplink RS resource sets; and in the case where the first field is a second value, the first uplink RS resource set in the association relationship indicated by the first field is an uplink RS resource set with a lowest ID among the multiple uplink RS resource sets.

Optionally, the association relationship between the first TCI state and the first uplink RS resource set is predefined by a protocol, and/or, the association relationship between the second TCI state and the second uplink RS resource set is predefined by the protocol.

Optionally, the first signaling is implemented as multiple DCI, where the multiple DCI includes first DCI and second DCI, where the first DCI indicates the association relationship between the first TCI state and the first uplink RS resource set, and the second DCI indicates the association relationship between the second TCI state and the second uplink RS resource set.

Optionally, the first TCI state includes a first RS in QCL-type D. The case of determining the association relationship between the first TCI state among the multiple TCI states and the first uplink RS resource set among the multiple uplink RS resource sets includes the following. Determine the association relationship between the first TCI state and the first uplink RS resource set according to a QCL relation between the first RS and at least one uplink RS resource in the first uplink RS resource set; or receive second signaling from the network device, where the second signaling is DCI, the second signaling indicates a first uplink RS resource, the first uplink RS resource is contained in the first uplink RS resource set, and the association relationship between the first TCI state and the first uplink RS resource set is determined according to a QCL relation between the first RS and the first uplink RS.

Optionally, the chip includes at least one processor, at least one first memory, and at least one second memory. The at least one first memory and the at least one processor are interconnected via a line. The first memory is configured to store instructions. The at least one second memory and the at least one processor are interconnected via a line. The second memory is configured to store data to-be-stored in the method embodiments.

For each apparatus and product applicable to or integrated into a chip, each module included may be implemented by means of hardware such as circuits, or at least part of modules may be implemented by means of a software program that run on a processor integrated inside the chip, and the remaining (if any) modules may be implemented by means of hardware such as circuits.

Refer to FIG. 5, which is another schematic structural diagram illustrating an apparatus for determining an association relationship provided in embodiments of the disclosure. The apparatus for determining an association relationship may be a terminal device or a network device. The apparatus for determining an association relationship 500 may include a memory 501 and a processor 502. Optionally, the apparatus for determining an association relationship 500 may further include a communication interface 503. The memory 501, the processor 502, and the communication interface 503 are connected with each other via one or more communication buses. The communication interface 503 is controlled by the processor 502 and is configured to transmit or receive information.

The memory 501 may include a read-only memory (ROM) and a random access memory (RAM) and provide instructions and data to the processor 502. Part of the memory 501 may further include a non-volatile RAM.

The communication interface 503 is configured to receive or transmit data.

The processor 502 may be a central processing unit (CPU). The processor 502 may also be a general-purpose processor, a digital signal processor (DSP), an application specific integrated circuit (ASIC), a field programmable gate array (FPGA), or other programmable logic devices, discrete gates or transistor logic devices, discrete hardware components, etc. The general-purpose processor may be a microprocessor. Optionally, the processor 502 may be any conventional processor or the like.

The memory 501 is configured to store program instructions. The processor 502 is configured to invoke the program instructions stored in the memory 501. The processor 502 is configured to invoke the program instructions stored in the memory 501 to enable the apparatus for determining an association relationship 500 to perform the method performed by the terminal device or the network device in the foregoing method embodiments.

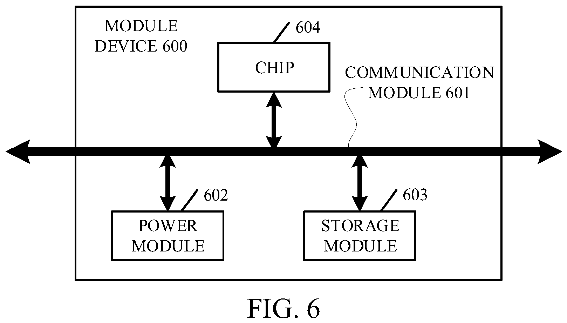

Refer to FIG. 6, which is a schematic structural diagram illustrating a module device provided in embodiments of the disclosure. The module device 600 may perform the operations performed by the terminal device or the network device in the foregoing method embodiments. The module device 600 includes a communication module 601, a power module 602, a storage module 603, and a chip 604.

The power module 602 is configured to power the module device. The storage module 603 is configured to store data and instructions. The communication module 601 is configured to perform internal communication in the module device or perform communication between the module device and an external device. The chip 604 is configured to perform the method performed by the terminal device or the network device in the foregoing method embodiments.

It may be noted that, for contents not mentioned and specific implementations of each operation in embodiments as illustrated in FIG. 5 and FIG. 6, reference may be made to embodiments as illustrated in FIG. 2 and the foregoing contents, which will not be repeated herein.

A computer-readable storage medium is further provided in embodiments of the disclosure. The computer-readable storage medium is configured to store instructions. When the instructions are run on a processor, the operations of the method of the foregoing method embodiments can be implemented.

A computer program product is further provided in embodiments of the disclosure. When the computer program product is run on a processor, the operations of the method of the foregoing method embodiments can be implemented.

Each module/unit in the apparatuses or products described in the foregoing embodiments may be a software module/unit or a hardware module/unit, or may be partially a software module/unit and partially a hardware module/unit. For example, for each apparatus and product applicable to or integrated into a chip, each module/unit included may be implemented by means of hardware such as circuits, or at least part of modules/units may be implemented by means of a software program that run on a processor integrated inside the chip, and the remaining (if any) modules/units may be implemented by means of hardware such as circuits. For each apparatus and product applicable to or integrated into a chip module, each module/unit included may be implemented by means of hardware such as circuits, and different modules/units may be located in the same component (such as a chip, a circuit module, etc.) or different components of the chip module. Alternatively, at least part of modules/units may be implemented by means of the software program that is run on a processor integrated inside the chip module, and the remaining (if any) modules/units may be implemented by means of hardware such as circuits. For each apparatus and product applicable to or integrated into a terminal device, each module/unit included may be implemented by means of hardware such as circuits, and different modules/units may be located in the same component (e.g., a chip, a circuit module, etc.) or different components in the terminal device, or at least part of modules/units may be implemented by means of the software program that run on a processor integrated inside the terminal device, and the remaining (if any) modules/units may be implemented by means of hardware such as circuits.

It may be noted that, for the sake of simplicity, the various method embodiments above are described as a series of action combinations. However, it will be appreciated by those skilled in the art that the disclosure is not limited by the sequence of actions described. According to the disclosure, some operations may be performed in other orders or simultaneously. In addition, it will be appreciated by those skilled in the art that the embodiments described in the specification are preferable embodiments, and the actions and modules involved are not necessarily essential to the disclosure.

For illustrations of embodiments of the disclosure, references may be made to each other, and the illustration of each embodiment has its own emphasis. For part not described in detail in an embodiment, reference may be made to related illustrations in other embodiments. For the sake of convenience and brevity, for example, for functions of and operations performed by the apparatuses and devices provided in embodiments of the disclosure, reference may be made to related illustrations in the method embodiments of the disclosure. Mutual reference, combination, or citing may also be made between the method embodiments and between the apparatus embodiments.

Finally, it may be noted that, the foregoing embodiments are merely intended for describing the technical solutions of the disclosure, but are not intended to limit the disclosure. Although the disclosure is described in detail with reference to the foregoing embodiments, those of ordinary skill in the art may understand that modifications can still be made to the technical solutions described in the foregoing embodiments, or equivalent replacements can be made to some or all technical features. However, these modifications or replacements do not make the essence of the corresponding technical solutions depart from the scope of the technical solutions of the embodiments of the disclosure.

## Claims

1. A method for determining an association relationship, comprising:
receiving configuration information from a network device, wherein the configuration information comprises a transmission configuration indicator (TCI) state or a plurality of TCI states, and comprises an uplink reference signal (RS) resource set or a plurality of uplink RS resource sets; and
determining an association relationship between a first TCI state among the plurality of TCI states and a first uplink RS resource set among the plurality of uplink RS resource sets, and/or, an association relationship between a second TCI state among the plurality of TCI states and a second uplink RS resource set among the plurality of uplink RS resource sets.

2. The method of claim 1, wherein
the first uplink RS resource set is an uplink RS resource set with a lowest or highest identifier (ID) among the plurality of uplink RS resource sets; or
the first uplink RS resource set is a 1st uplink RS resource set among the plurality of uplink RS resource sets.

3. The method of claim 1 or 2, wherein the first TCI state is a 1st TCI state among the plurality of TCI states.

4. The method of any one of claims 1 to 3, wherein determining the association relationship between the first TCI state among the plurality of TCI states and the first uplink RS resource set among the plurality of uplink RS resource sets, and/or, the association relationship between the second TCI state among the plurality of TCI states and the second uplink RS resource set among the plurality of uplink RS resource sets, comprises:
receiving first signaling from the network device, wherein the first signaling indicates one or more of: the association relationship between the first TCI state and the first uplink RS resource set, and the association relationship between the second TCI state and the second uplink RS resource set, and wherein the first signaling comprises one or more of: radio resource control (RRC) signaling, a medium access control control element (MAC CE), and downlink control information (DCI); and
determining, according to the first signaling, the association relationship between the first TCI state and the first uplink RS resource set, and/or, the association relationship between the second TCI state and the second uplink RS resource set.

5. The method of claim 4, wherein the first signaling is implemented as a plurality of RRC signaling, wherein the plurality of RRC signaling comprises first RRC signaling and second RRC signaling, wherein the first RRC signaling indicates the association relationship between the first TCI state and the first uplink RS resource set, and the second RRC signaling indicates the association relationship between the second TCI state and the second uplink RS resource set.

6. The method of claim 4, wherein
the first signaling is implemented as an MAC CE, wherein the MAC CE contains a first field and a second field, wherein the first field indicates the association relationship between the first TCI state and the first uplink RS resource set, and the second field indicates the association relationship between the second TCI state and the second uplink RS resource set; or
the first signaling is implemented as a plurality of MAC CEs, wherein the plurality of MAC CEs comprise a first MAC CE and a second MAC CE, wherein the first MAC CE indicates the association relationship between the first TCI state and the first uplink RS resource set, and the second MAC CE indicates the association relationship between the second TCI state and the second uplink RS resource set.

7. The method of claim 6, wherein
the first field is a first value, and the first uplink RS resource set in the association relationship indicated by the first field is a 1st uplink RS resource set among the plurality of uplink RS resource sets; or the first field is a second value, and the first uplink RS resource set in the association relationship indicated by the first field is a 2nd uplink RS resource set among the plurality of uplink RS resource sets; or
the first field is the first value, and the first uplink RS resource set in the association relationship indicated by the first field is an uplink RS resource set with a lowest ID among the plurality of uplink RS resource sets; or the first field is the second value, and the first uplink RS resource set in the association relationship indicated by the first field is an uplink RS resource set with a highest ID among the plurality of uplink RS resource sets; or
the first field is the first value, and the first uplink RS resource set in the association relationship indicated by the first field is an uplink RS resource set with a highest ID among the plurality of uplink RS resource sets; or the first field is the second value, and the first uplink RS resource set in the association relationship indicated by the first field is an uplink RS resource set with a lowest ID among the plurality of uplink RS resource sets.

8. The method of any one of claims 1 to 4, wherein the association relationship between the first TCI state and the first uplink RS resource set is predefined by a protocol, and/or, the association relationship between the second TCI state and the second uplink RS resource set is predefined by the protocol.

9. The method of claim 4, wherein
the first signaling is implemented as a plurality of DCI, wherein the plurality of DCI comprises first DCI and second DCI, wherein the first DCI indicates the association relationship between the first TCI state and the first uplink RS resource set, and the second DCI indicates the association relationship between the second TCI state and the second uplink RS resource set.

10. The method of any one of claims 1 to 3, wherein the first TCI state comprises a first RS in quasi-co-location (QCL)-type D, and determining the association relationship between the first TCI state among the plurality of TCI states and the first uplink RS resource set among the plurality of uplink RS resource sets comprises:
determining the association relationship between the first TCI state and the first uplink RS resource set according to a QCL relation between the first RS and at least one uplink RS resource in the first uplink RS resource set; or
receiving second signaling from the network device, wherein the second signaling is DCI, the second signaling indicates a first uplink RS resource, the first uplink RS resource is contained in the first uplink RS resource set, and the association relationship between the first TCI state and the first uplink RS resource set is determined according to a QCL relation between the first RS and the first uplink RS.

11. An apparatus for determining an association relationship, comprising:
a receiving unit configured to receive configuration information from a network device, wherein the configuration information comprises a transmission configuration indicator (TCI) state or a plurality of TCI states, and comprises an uplink reference signal (RS) resource set or a plurality of uplink RS resource sets; and
a determining unit configured to determine an association relationship between a first TCI state among the plurality of TCI states and a first uplink RS resource set among the plurality of uplink RS resource sets, and/or, an association relationship between a second TCI state among the plurality of TCI states and a second uplink RS resource set among the plurality of uplink RS resource sets.

12. The apparatus of claim 11, wherein
the first uplink RS resource set is an uplink RS resource set with a lowest or highest identifier (ID) among the plurality of uplink RS resource sets; or
the first uplink RS resource set is a 1st uplink RS resource set among the plurality of uplink RS resource sets.

13. The apparatus of claim 11 or 12, wherein the first TCI state is a 1st TCI state among the plurality of TCI states.

14. The apparatus of any one of claims 11 to 13, wherein the determining unit configured to determine the association relationship between the first TCI state among the plurality of TCI states and the first uplink RS resource set among the plurality of uplink RS resource sets, and/or, the association relationship between the second TCI state among the plurality of TCI states and the second uplink RS resource set among the plurality of uplink RS resource sets is specifically configured to:
receive first signaling from the network device via the receiving unit, wherein the first signaling indicates one or more of: the association relationship between the first TCI state and the first uplink RS resource set, and the association relationship between the second TCI state and the second uplink RS resource set, and wherein the first signaling comprises one or more of: radio resource control (RRC) signaling, a medium access control control element (MAC CE), and downlink control information (DCI); and
determine, according to the first signaling, the association relationship between the first TCI state and the first uplink RS resource set, and/or, the association relationship between the second TCI state and the second uplink RS resource set.

15. The apparatus of claim 14, wherein the first signaling is implemented as a plurality of RRC signaling, wherein the plurality of RRC signaling comprises first RRC signaling and second RRC signaling, wherein the first RRC signaling indicates the association relationship between the first TCI state and the first uplink RS resource set, and the second RRC signaling indicates the association relationship between the second TCI state and the second uplink RS resource set.

16. The apparatus of claim 14, wherein
the first signaling is implemented as an MAC CE, wherein the MAC CE contains a first field and a second field, wherein the first field indicates the association relationship between the first TCI state and the first uplink RS resource set, and the second field indicates the association relationship between the second TCI state and the second uplink RS resource set; or
the first signaling is implemented as a plurality of MAC CEs, wherein the plurality of MAC CEs comprise a first MAC CE and a second MAC CE, wherein the first MAC CE indicates the association relationship between the first TCI state and the first uplink RS resource set, and the second MAC CE indicates the association relationship between the second TCI state and the second uplink RS resource set.

17. The apparatus of claim 16, wherein
the first field is a first value, and the first uplink RS resource set in the association relationship indicated by the first field is a 1st uplink RS resource set among the plurality of uplink RS resource sets; or the first field is a second value, and the first uplink RS resource set in the association relationship indicated by the first field is a 2nd uplink RS resource set among the plurality of uplink RS resource sets; or
the first field is the first value, and the first uplink RS resource set in the association relationship indicated by the first field is an uplink RS resource set with a lowest ID among the plurality of uplink RS resource sets; or the first field is the second value, and the first uplink RS resource set in the association relationship indicated by the first field is an uplink RS resource set with a highest ID among the plurality of uplink RS resource sets; or
the first field is the first value, and the first uplink RS resource set in the association relationship indicated by the first field is an uplink RS resource set with a highest ID among the plurality of uplink RS resource sets; or the first field is the second value, and the first uplink RS resource set in the association relationship indicated by the first field is an uplink RS resource set with a lowest ID among the plurality of uplink RS resource sets.

18. The apparatus of any one of claims 11 to 14, wherein the association relationship between the first TCI state and the first uplink RS resource set is predefined by a protocol, and/or, the association relationship between the second TCI state and the second uplink RS resource set is predefined by the protocol.

19. The apparatus of claim 14, wherein
the first signaling is implemented as a plurality of DCI, wherein the plurality of DCI comprises first DCI and second DCI, wherein the first DCI indicates the association relationship between the first TCI state and the first uplink RS resource set, and the second DCI indicates the association relationship between the second TCI state and the second uplink RS resource set.

20. The apparatus of any one of claims 11 to 13, wherein the first TCI state comprises a first RS in quasi-co-location (QCL)-type D, and the determining unit configured to determine the association relationship between the first TCI state among the plurality of TCI states and the first uplink RS resource set among the plurality of uplink RS resource sets is specifically configured to:
determine the association relationship between the first TCI state and the first uplink RS resource set according to a QCL relation between the first RS and at least one uplink RS resource in the first uplink RS resource set; or
receive second signaling from the network device via the receiving unit, wherein the second signaling is DCI, the second signaling indicates a first uplink RS resource, the first uplink RS resource is contained in the first uplink RS resource set, and the association relationship between the first TCI state and the first uplink RS resource set is determined according to a QCL relation between the first RS and the first uplink RS.

21. A chip, comprising:
a communication interface; and
a processor configured to enable the chip to perform the method of any one of claims 1 to 10.

22. A module device, comprising:
a power module configured to power the module device;
a storage module configured to store data and instructions;
a communication module configured to perform internal communication in the module device or perform communication between the module device and an external device; and
a chip configured to perform the method of any one of claims 1 to 10.

23. An apparatus for determining an association relationship, comprising:
a memory configured to store a computer program, the computer program comprising program instructions; and
a processor configured to invoke the program instructions to enable the apparatus for determining an association relationship to perform the method of any one of claims 1 to 10.

24. A computer-readable storage medium configured to store computer-readable instructions which, when run on a communication apparatus, enable the communication apparatus to perform the method of any one of claims 1 to 9.
